# EUROPÄISCHE PATENTSCHRIFT

(11) **EP 0 494 171 B1**
(45) Veröffentlichungstag und Bekanntmachung des Hinweises auf die Patenterteilung: **07.12.1994**
(21) Anmeldenummer: 90913460.3
(22) Anmeldetag: 18.09.1990
(51) Int. Cl.: G01M 15/00, F02B 77/08

(54) **VERFAHREN ZUM ERMITTELN DER LAUFUNRUHE EINER BRENNKRAFTMASCHINE**
PROCESS FOR DETECTING IRREGULAR RUNNING IN AN INTERNAL COMBUSTION ENGINE
PROCEDE DE DETECTION DES IRREGULARITES DE FONCTIONNEMENT D'UN MOTEUR A COMBUSTION INTERNE

(30) Priorität: 29.09.1989 DE 3932649
(43) Veröffentlichungstag der Anmeldung: 15.07.1992
(73) Patentinhaber: ROBERT BOSCH GMBH, 70442 Stuttgart (DE)
(72) Erfinder: SCHLIENZ, Ulrich, D-7333 Ebersbach-Rosswaelden (DE); SIEG, Raymond, D-7000 Stuttgart 50 (DE); SCHWARZ, Alexander, D-7310 Plochingen (DE)
(86) Internationale Anmeldenummer: DE9000714
(87) Internationale Veröffentlichungsnummer: WO9105233

(56) Entgegenhaltungen:
- DE-A- 3 505 440
- DE-C- 3 105 331
- US-A- 4 123 935

## Beschreibung

### Stand der Technik

Die Erfindung betrifft ein Verfahren zum Ermitteln der Laufunruhe einer Brennkraftmaschine. Diese ist ein Maß für die durch die Schwankungen der Energieumsetzung (von Zyklus zu Zyklus sowie zwischen den Zylindern der Brennkraftmaschine) verursachte Ungleichförmigkeit der Winkelgeschwindigkeit der-Kurbelwelle. Zum einen wird die Laufunruhe dadurch verursacht, daß bei der Energieumsetzung vergleichsweise große Streuungen auftreten können. Die Streuungen beruhen auf Schwankungen der Teilchenbewegungen, der Luftzahl, des Restgasanteils, der Temperatur und der Vorgänge beim Starten des Verbrennungsvorgangs. Betroffen sind gleichermaßen fremdgezündete als auch Diesel-Brennkraftmaschinen. Neben diesen statistischen Vorgängen gibt es systematische Abweichungen oder Fehler, die eine Erhöhung der Laufunruhe zur Folge haben. Hierzu zählen Verdichtung, gegebenenfalls elektrische Zündung, Ventilspiel und Kraftstoffzumessung, die für jeden Zylinder der Brennkraftmaschine unterschiedlich sein können und somit die Laufunruhe beeinflussen.

Aus der DE-A 35 05 440 ist ein Verfahren zur Laufzustandsanalyse von Verbrennungsmotoren mit elektrischer Zündanlage bekannt, bei dem die Drehzahl der Brennkraftmaschine - und somit die Laufruhe - durch elektronische Messung des Zeitabstands zweier aufeinanderfolgender Zündspannungsimpulse unterschiedlicher Zylinder ermittelt wird. Ferner werden die Zündimpulse eines Bezugszylinders erfaßt, die eine Zuordnung der Laufunruhe zu den einzelnen Zylindern der Brennkraftmaschine ermöglichen. Ein scheinbar hoch aufgelöstes Drehzahlsignal wird bei der bekannten Vorrichtung durch Auffüllen der Zweiten zwischen zwei Zündimpulsen durch zusätzlich erzeugte Impulse erreicht. Diese zusätzlich erzeugten Impulse sind zeitlich äquidistant und enthalten keine Information über die momentane tatsächliche Drehzahl der Brennkraftmaschine.

Demgegenüber bringt die DE-A 31 05 331 eine Verbesserung, die ein Verfahren zum Vergleich während eines unter Vollgas beschleunigten Hochlaufs mit einem ohne Brennstoffzufuhr erfolgten Auslaufs einer Dieselbrennkraftmaschine beschreibt. Bei diesem bekannten Verfahren wird das Klemme-W-Signal herangezogen, das an einem von der Brennkraftmaschine angetriebenen Generator abgegriffen wird. Bei diesem Klemme-W-Signal handelt es sich um einen separat herausgeführten Anschluß bei einigen Typen von Drehstromlichtmaschinen, der unmittelbar zu einer der Feldwicklungen führt. Üblicherweise sind drei Feldwicklungen vorgesehen, die mit U, V und W bezeichnet werden. Das bekannte Verfahren benötigt keine hohe Auslösung der Drehzahl, weil lediglich jeweils der integrale Betrag innerhalb eines Arbeitszyklus eines Zylinders der Dieselbrennkraftmaschine zum Erreichen einer bestimmten Drehzahl ausgewertet wird.

Der Erfindung liegt die Aufgabe zugrunde, ein Verfahren zum hochaufgelösten Ermitteln der Laufunruhe einer Brennkraftmaschine anzugeben, das ohne speziellen Sensor auskommt und sowohl für fremdgezündete als auch für Dieselbrennkraftmaschinen geeignet ist.

Die Aufgabe wird durch die Merkmale des Hauptanspruchs gelöst.

### Vorteile der Erfindung

Das erfindungsgemäße Verfahren weist zunächst den Vorteil einer leichten Adaption auf. Es wird lediglich ein Anschluß am Generator oder an einer am Generator angeschlossenen Last benötigt. Sofern die Brennkraftmaschine als Motor in einem Kraftfahrzeug vorgesehen ist, wird ein Anschluß beispielsweise am Zigarettenanzünder möglich. Da keine speziellen Sensoren erforderlich sind, eignet sich das erfindungsgemäße Verfahren zum Ermitteln der Laufunruhe gleichermaßen bei fremdgezündeten als auch bei Dieselbrennkraftmaschinen.

Ein weiterer Vorteil des erfindungsgemäßen Verfahrens ist es, daß die Ermittlung der Laufunruhe bei unterschiedlichen Typen vorhandener Generatoren möglich ist. Geeignet sind Gleichstrom-, Wechselstrom- und Drehstromgeneratoren, sowohl mit als auch ohne Gleichrichter.

Die Laufunruhe wird aus einem Anteil eines Signals Ub ermittelt, der eine kurze Periodendauer Tmn enthält. Dieser Signalanteil mit der kurzen Periodendauer Tmn geht aus der Überlagerung der Energiebeiträge einzelner Ankerwicklungen bei Gleichstromgeneratoren oder einzelner Phasen bei Wechselstromgeneratoren hervor.

Die Auflösung der Meßwerte wird weiter dadurch erhöht, daß der Generator, der von der Brennkraftmaschine angetrieben wird, im allgemeinen mit höherer Drehzahl dreht als die Brennkraftmaschine selbst. Die höhere Drehzahl des Generators im Vergleich zu der der Brennkraftmaschine sowie der vom Konstruktionsprinzip des Generators abhängige Signalverlauf Ub ergibt zahlreiche Zeitabschnitte Tmn jeweils zwischen den Verbrennungsvorgängen der Zylinder, so daß mit der Auswertung der Zeiten Tmn eine besonders hohe Auslösung des Meßwerts ohne Interpolation möglich ist.

Vorteilhafte Weiterbildungen und Verbesserungen des erfindungsgemäßen Verfahrens sind in abhängigen Ansprüchen angegeben.

Eine vorteilhafte Ausgestaltung des erfindungsgemäßen Verfahrens sieht den Einsatz eines adaptiven Filters zur Ermittlung der Zeiten Tmn vor, da das beispielsweise vom Bordnetz abgegriffene Signal Ub zweckmäßigerweise von Störungen befreit wird, die aufgrund von elektromagnetischen Verkopplungen oder beispielsweise vom Generatorregler hervorgerufen werden. Das adaptive Filter ermöglicht eine gute Störunterdrückung über die gesamte Nutzbandbreite des zu erwarteten Signalspektrums bei einem maximalen Verhältnis von Nutzsignal/Störsignal.

Eine vorteilhafte Weiterbildung des erfindungsgemäßen Verfahrens sieht die Ermittlung der Zeiten Tmn aus Kommutierungsschwingungen des Signals Ub vor. Kommutierungsschwingungen treten insbesondere auf, wenn ein Wechselstrom-/Drehstromgenerator mit Gleichrichtern vorhanden ist. Die Kommutierungsschwingungen entstehen beim Übergang des Energieflusses von einer Wicklung zur anderen Wicklung.

Eine andere Weiterbildung des erfindungsgemäßen Verfahrens sieht vor, daß einer Auswerteeinheit, in der die Laufruhe ermittelt wird, ein Signal eines Bezugszylinders zugeführt wird, mit dem eine Zuordnung der Laufunruhe zu den einzelnen Zylindern der Brennkraftmaschine möglich ist.

Eine weitere vorteilhafte Weiterbildung des erfindungsgemäßen Verfahrens betrifft die Auswertung der Meßsignale zur Ermittlung der Laufunruhe in Abhängigkeit von Signalen, die von einem Steuer-/Regelgerät der Brennkraftmaschine der Laufunruhe-Auswerteeinheit zugeführt werden. Somit kann die ohnehin mögliche Meßwertaufnahme sowohl bei konstanter Drehzahl, beispielsweise im Leerlauf, als auch bei veränderlichen Drehzahlen, beispielsweise bei Beschleunigungen oder Verzögerungen der Brennkraftmaschine mit Soll- oder Istwertvorgaben aus dem Steuer-/Regelgerät korreliert werden.

Weitere vorteilhafte Weiterbildungen und Ausgestaltungen des erfindungsgemäßen Verfahrens ergeben sich aus weiteren abhängigen Ansprüchen in Verbindung mit der folgenden Beschreibung.

### Zeichnung

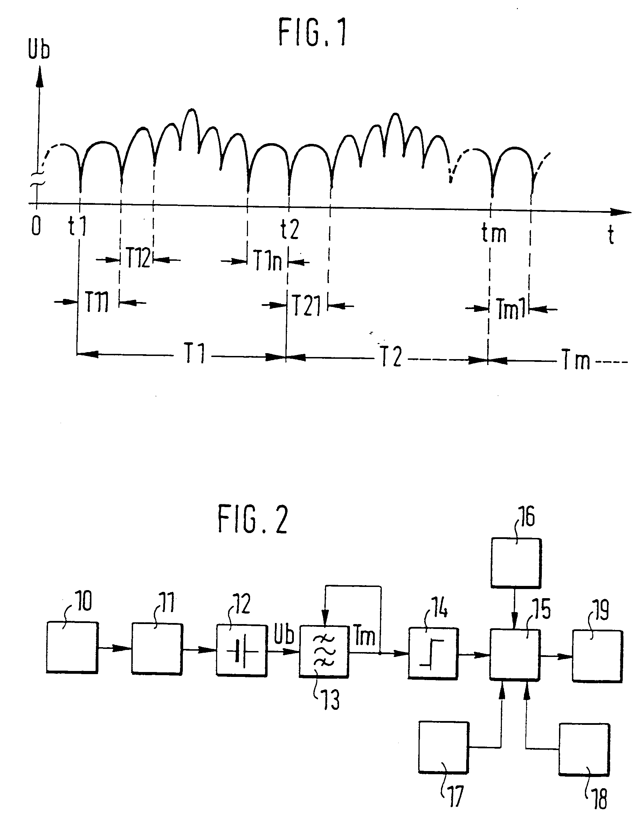

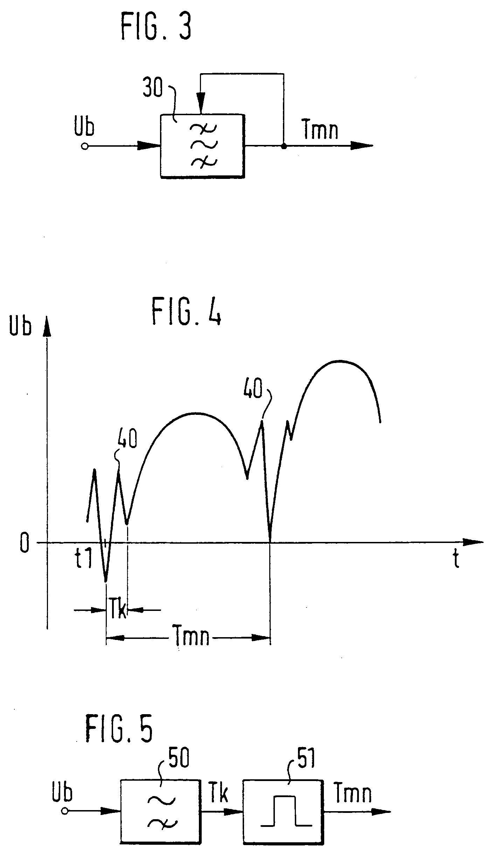

Figur 1 zeigt einen Signalverlauf, aus dem die Laufunruhe ermittelt wird, Figur 2 zeigt ein Blockschaltbild einer signalverarbeitenden Anordnung zur Ermittlung der Laufunruhe einer Brennkraftmaschine Figur 3 zeigt ein Blockschaltbild eines in Figur 2 enthaltenen adaptiven Filters, Figur 4 zeigt den in Figur 1 gezeigten Signalverlauf mit höherer zeitlicher Auflösung und Figur 5 zeigt das Blockschaltbild einer signalverarbeitenden Anordnung zur Ermittlung eines bestimmten Signalanteils aus dem in Figur 4 gezeigten Signal.

Figur 1 zeigt ein Signal Ub, das an einem von einer Brennkraftmaschine angetriebenen Generator oder an einer vom Generator mit elektrischer Energie versorgten Last auftritt. Das Signal Ub weist einen quasiperiodischen Signalanteil mit den niedrigen Periodendauern T1, T2 ... Tm auf. Die Zeiten Tm entsprechen den Differenzen zwischen den auf der Zeitachse t eingetragenen Zeitpunkten t1 und t2 bis t (m-1) und tm. Die Zahl m entspricht der Anzahl der Zylinder der Brennkraftmaschine. Die Zeiten Tm können unterschiedlich lang sein. Sie entsprechen einem Arbeitstakt der Brennkraftmaschine, der einen Verbrennungsvorgang in einem Zylinder umfaßt, der bei einer ordnungsgemäß arbeitenden Brennkraftmaschine zu einem Drehzahlanstieg und einem anschließenden Abfall führt.

Ferner weist das Signal Ub einen Signalanteil mit kurzen Periodendauern T11, T12 ... T1n ... Tm1, Tm2 .... Tmn auf. Die Zeiten Tm1 ... Tmn ergeben zusammen die Zeit Tm für den Arbeitszyklus eines Zylinders. Die Zeiten Tm1 ... Tmn sind sowohl innerhalb der Zeit Tm als auch bezogen auf die korrespondierenden Zeiten T(m-1)1.... T(m-1)n des Arbeitszyklusses des vorangegangenen Zylinders unterschiedlich lang.

Figur 2 zeigt ein Blockschaltbild einer signalverarbeitenden Anordnung. Mit der Bezugszahl 10 ist eine Brennkraftmaschine bezeichnet, die wenigstens einen Generator 11 antreibt. Der Generator 11 gibt elektrische Energie an eine Last 12 ab, die beispielsweise dem Bordnetz eines Kraftfahrzeugs entspricht, sofern die Brennkraftmaschine in einem Kraftfahrzeug angeordnet ist. Das an der Last 12 auftretende Signal Ub wird einem ersten Signalfilter 13 zugefühtt, dessen Ausgangssignal sowohl einer Schwellwertstufe 14 als auch dem Filter 13 selbst zugeleitet wird. Am Ausgang des Filters 13 tritt der Signalanteil mit den Zeiten Tm auf, aus dem die Schwellwertstufe 14 geeignete Signale, vorzugsweise Digitalsignale für die nachfolgende Auswerteeinheit 15 bereitstellt. Der Auswerteeinheit 15 werden ferner Signale von einer Zylinderzahlvorgabe 16, einem Bezugszylindergeber 17 und einem Steuer-/Regelgerät 18 der Brennkraftmaschine 10 zugeleitet. Die Auswerteeinheit 15 gibt ein Ausgangssignal an eine Ausgabe 19 ab.

Figur 3 zeigt ein Blockschaltbild eines Signalfilters 30, dem das Signal Ub zugeführt wird. Am Ausgang des Filters 30 tritt der Signalanteil mit den Zeiten Tmn des Signals Ub auf. Vom Ausgang des Filters 30 geht ein Signalweg zurück zum Filter 30 selbst.

Figur 4 zeigt einen zeitlich höher aufgelösten Abschnitt des in Figur 1 gezeigten Signals Ub. Zwischen den Zeiten Tmn sind kurzzeitige Kommutierungsschwingungen 40 vorhanden, die eine Periodendauer der Zeit Tk aufweisen.

Figur 5 zeigt eine signalverarbeitende Anordnung zur Ermittlung der Zeiten Tmn. Das Signal Ub wird über ein Hochpaßfilter 50 einem Signalformer 51 zugeleitet, an dessen Ausgang ein Signal mit den Zeiten Tmn auftritt.

Das erfindungsgemäße Verfahren zum Ermitteln der Laufunruhe einer Brennkraftmaschine wird anhand dem in Figur 2 gezeigten Blockschaltbild in Verbindung mit dem in Figur 1 gezeigten Signal Ub näher erläutert:

Die Brennkraftmaschine 10 treibt den Generator 11 an, der beispielsweise eine Last 12 mit elektrischer Energie versorgt. Es ist nicht zwingend erforderlich, daß eine Last 12 vorhanden ist, da das Signal Ub sowohl am Generator 11 ohne Last 12 als auch an der Last 12 auftritt. Das Signal Ub ist beispielsweise die am Generator 11 oder die an der Last 12 auftretende Spannung. Das Signal Ub kann aber auch ein Maß für den durch die Last 12 fließenden, vom Generator 11 abgegebenen Strom sein.

Als Generator 11 können unterschiedliche Typen vorgesehen sein. Der Generator 11 kann als Gleichstromgenerator oder als Wechselstromgenerator ausgestaltet sein. Der Wechselstromgenerator kann eine oder mehrere Phasen aufweisen. Die einzelnen Phasen des Wechselstromgenerators können Gleichrichter aufweisen, die derart zusammengeschaltet sind, daß eine pulsierende Gleichspannung auftritt. Dieser Generatortyp wird als Drehstromgenerator bezeichnet und wird vorzugsweise zur Versorgung eines Bordnetzes in einem Kraftfahrzeug mit elektrischer Energie verwendet. Die Ausbildung des Generators als Wechselstromgenerators findet beispielsweise Anwendung bei Heizungen oder anderen elektrischen Verbrauchern, die keinen Gleichstrom benötigen. Allen Generatortypen ist gemeinsam, daß die in Figur 1 gezeigten charakteristischen Zeiten Tm und Tmn im Signal Ub auftreten. Die Zeiten Tm sind von den Arbeitszyklen und die Anzahl von der Zylinderanzahl der Brennkraftmaschine festgelegt. Die Zeiten Tmn hängen bei Gleichstromgeneratoren von der Anzahl der getrennten Ankerwicklungen und bei Wechselstromgeneratoren von der Anzahl der vorgesehenen Phasen ab. In allen Fällen hängen die Zeiten Tmn ebenfalls vom Übersetzungsverhältnis zwischen Brennkraft- maschine und Generator ab. Der charakteristische Signalverlauf des Signals Ub mit den parabelbogenähnlichen Abschnitten ist in Figur 1 beispielhaft für eine gleichstromversorgte Last 12 angegeben, wobei nur der verhältnismäßig geringe Wechselspannungsanteil unter Weglassung des erheblich höheren Gleichspannungsanteils auftritt. Die charakteristischen Zeiten Tm und Tmn treten aber auch bei reinem Wechselspannungsbetrieb auf, wobei sowohl positive oder negative als auch beide Halbwellen zur Auswertung herangezogen werden können.

Die Ermittlung der Laufunruhe kann zunächst mit den Zeiten Tm vorgenommen werden. Der Signalanteil mit den Zeiten Tm wird aus dem Signal Ub mit Hilfe des Filters 13, das als Bandpaßfilter ausgestaltet ist abgetrennt. Das Filter 13 trennt sowohl unerwünschte niederfrequente als auch hochfrequente Störsignale ab, wie sie beispielsweise vom Generatorregler oder von sonstigen Schaltvorgängen in der Last 12 verursacht werden.

In einer vorteilhaften Ausgestaltung ist das Filter 13 als ein adaptives Filter ausgebildet, wofür sich insbesondere eine Realisierung als Digitalfilter oder als Filter mit geschalteten Kapazitäten eignet. Das digitale Filter weist den Vorteil einer vollständigen Realisierung in Software auf. Zur Beurteilung des dem Filter 13 zugeführten Signals Ub wird der Bandpaß über das gesamte Frequenzband abgestimmt und beispielsweise die Ausgangsamplitude des Filters durch Amplitudenmessung bewertet. Da die Störungen nur sporadisch auftreten, die quasiperiodischen Vorgänge mit den Zeiten Tm des Signals Ub dagegen kontinuierlich vorliegen, ist auf diese Weise ein korrektes Setzen der Bandpaßparameter des digitalen Filters oder des Filters mit geschalteten Kapazitäten möglich.

Die Schwellwertstufe 14, die gegebenenfalls vorgesehen ist, bereitet das die Zeiten Tm enthaltende Signal formgerecht für die Weiterverarbeitung in der Auswerteeinheit 15 auf. Die Auswerteeinheit 15 ermittelt beispielsweise aus den Differenzen aufeinanderfolgender Zeiten Tm und T(m+1) oder aus anderen arithmetischen Operationen mit den Zeiten Tm ein Maß für die Laufunruhe der Brennkrafmaschine 10 und gibt das Ergebnis an die Ausgabe 19 ab.

Die Ausgabe 19 kann beispielsweise eine Anzeige oder ein größeres Diagnosesystem sein. Über die Eingabe 16 ist das gewünschte Auswerteverfahren eingebbar. Ferner kann, sofern die Ausgabe 19 eine Anzeigeeinheit ist, über die Eingabe 16 festgelegt werden, welche Werte angezeigt werden und ob beispielsweise ein Signalabschnitt mit zurückliegenden Meßwerten durchgesehen werden soll. Weiterhin kann über die Eingabe 16 die Zylinderzahl der Brennkraftmaschine, die der Zahl m entspricht, vorgegeben werden. Diese Vorgabe ist nicht zwingend erforderlich, da die Auswerteeinheit 15 die Zylinderzahl aus Plausibilitätskontrollen der Zeiten Tm selbst ermitteln kann. Diese Möglichkeit ist selbst dann gegeben, wenn beispielsweise ein Zylinder der Brennkraftmaschine 10 komplett ausgefallen ist, so daß ein Signalanteil mit einer bestimmten Dauer Tm nicht vorhanden ist, wobei der davorliegende Zeitabschnitt T(m-1) eine ungewöhnlich große Zeit aufweist.

Sofern ein Bezugszylindersignalgeber 17 vorgesehen ist, kann die Laufunruhe den Nummern der Zylinder der Brennkraftmaschine 10 zugeordnet werden. In einer einfachen Ausgestaltung ist diese Zuordnung aber nicht erforderlich.

Eine dynamische Messung der Laufunruhe bei Beschleunigungen oder Verzögerungen der Brennkraftmaschine ergibt weitere Hinweise auf mögliche Fehlerquellen, die die Laufunruhe erhöhen.

Zusätzlich ist die Möglichkeit vorgesehen, der Auswerteeinheit ein Signal zuzuführen, das von dem Steuer-/Regelgerät der Brennkraftmaschine 10 abgegeben wird, sofern es vorhanden ist. Mit dieser Maßnahme wird es möglich, eine Korrelation der ermittelten Zeiten Tm und/oder Tmn mit Soll- oder Istwertvorgaben aus dem Steuer-/Regelgerät durchzuführen, die eine weitere Eingrenzung eines Fehlers gestattet.

Inbesondere bei hohen Drehzahlen wird die Ermittlung der Zeiten Tm immer schwieriger, weil die Schwankungen der Zeiten Tmn bei hohen Drehzahlen von Zylinder zu Zylinder immer geringer werden. Das erfindungsgemäße Verfahren sieht deshalb vor, die Laufunruhe unmittelbar aus den Zeiten Tmn zu ermitteln. Mit dem Austausch des in Figur 2 gezeigten Filters 13 mit dem in Figur 3 gezeigten Filter 30 wird die Erfassung der Zeiten Tmn möglich. Das Filter 30 unterscheidet sich vom Filter 13 lediglich in der Festlegung einer höheren Durchlaßfrequenz, die den Zeiten Tmn angepaßt ist. In der Auswerteeinheit 15 werden beispielsweise aufeinanderfolgende Zeiten Tmn und Tm (n+1) ausgewertet. Ebenso ist es möglich, die korrospondierenden Zeiten unterschiedlicher Zylinder Tmn und T (m+1) n miteinander zu vergleichen. Weitere arithmetische Funktionen sind ohne weiteres möglich.

In einer weiteren Ausgestaltung des erfindungsgemäßen Verfahrens wird die Laufunruhe sowohl aus den Zeiten Tmn als auch aus Zeiten Tm anhand unterschiedlichster arithmetischer Operationen ermittelt. Sofern ein Signal mit den Zeiten Tmn gemäß der Anordnung nach Figur 3 bereits ermittelt ist, kann der Signalanteil der Zeiten Tm mittels einer Frequenzmodulations(FM)-Demodulation aus dem Signal mit den Zeiten Tmn erhalten werden. Ein zweites Bandpaßfilter kann somit entfallen.

Gemäß einer weiteren vorteilhaften Ausgestaltung des erfindungsgemäßen Verfahrens werden die Zeiten Tmn aus den in Figur 4 gezeigten Kommutierungsschwingungen 40 ermittelt, die eine Periodendauer Tk aufweisen. Die Schwingungen 30 treten auf, wenn der Generator 11 als Wechselstrom-/Drehstromgenerator mit Gleichrichtung ausgestaltet ist. Nach der Anordnung gemäß Figur 5 wird das Signal Ub dem Filter 50 zugeleitet, das im einfachsten Fall als Hochpaßfilter ausgebildet ist, dessen untere Grenzfrequenz auf die Frequenz der Kommutierungsschwingungen (40) abgestimmt ist. Das Ausgangssignals des Filter 50 führt zum Signalformer 51, der beispielsweise als monostabiles Kippglied ausgebildet ist, das die Möglichkeit einer Re-Triggerung vorsieht, damit die Schwingungspakete jeweils nur einen einzigen Impuls am Ausgang des Impulsformers 51 auslösen. In einem in Figur 5 nicht gezeigten Signalverarbeitungsblock kann das Ausgangssignal des Impulsformers 51 einer Plausibilitätskontrolle unterzogen werden, wodurch sich die Störfestigkeit erhöht. Unbrauchbare oder falsche Impulse, die zu falschen Zeiten Tmn führen würden, könnten beispielsweise entstehen von Schaltvorgängen des Generatorreglers oder von anderen elektrischen Verbrauchern im Kraftfahrzeug. Die weitere Verarbeitung des Signals mit den Zeiten Tmn ist in der in Figur 2 gezeigten Anordnung wie bereits beschrieben vorgesehen.

Die in Figur 2, 3 und 5 gezeigten signalverarbeitenden Anordnungen 13 - 19, 30, 50, 51 können vollständig oder teilweise als Software in einem Rechner realisiert sein.

## Patentansprüche

1. Verfahren zum Ermitteln der Laufunruhe einer Brennkraftmaschine (10), bei dem eine signalverarbeitende Anordnung (13-19, 30, 50, 51) den Motorrundlauf der Brennkraftmaschine (10) aus einem Anteil eines Signals (Ub), das an einem von der Brennkraftmaschine (10) angetriebenen Generator (11) oder an einer am Generator (11) angeschlossenen Last (12) auftritt, ermittelt wird, der eine kurze Periodendauer (Tmn) enthält, die aus der Überlagerung der Energiebeiträge einzelner Ankerwicklungen oder Phasen des Generators (11) hervorgeht.

2. Verfahren nach Anspruch 1, bei dem der Signalanteil mit der Dauer (Tmn) mit einem adaptiven Filter (13, 30) aus dem Signal (Ub) herausgefiltert wird.

3. Verfahren nach Anspruch 1 oder 2, mit einer weiteren signalverarbeitenden Anordnung (50, 51), die den Signalanteil mit der kurzen Periodendauer (Tmn) aus Kommutierungsschwingungen (40) des Signals (Ub) eines als Wechselstrom-/Drehstromgenerator mit Gleichrichter ausgebildeten Generators (11) ermittelt.

4. Verfahren nach Anspruch 3, mit einer Plausibilitätskontrolle des von der weiteren signalverarbeitenden Anordnung (50, 51) abgegebenen Signals.

5. Verfahren nach einem der vorhergehenden Ansprüche, mit eine Zuordnung des Motorrundlaufs zu den einzelnen Zylindern der Brennkraftmaschine anhand der Vorgabe eines Bezugszylinders, der mit einem Bezugszylindersignalgeber (17) ermittelt wird.

6. Verfahren nach einem der vorhergehenden Ansprüche, bei dem die Laufunruhe in Abhängigkeit von Signalen ausgewertet wird, die von einem Steuer-/Regelgerät (18) der Brennkraftmschine (10) einer Auswerteeinheit 15 der signalverarbeitenden Anordnung (13 - 19, 30, 50, 51) zugeführt werden.

7. Verfahren nach einem der vorhergehenden Ansprüche, bei dem die Zylinderzahl m der Brennkraftmaschine (10) der Auswerteeinheit (15) über eine Eingabe (16) zugeleitet wird.

## Claims

1. A method for determining rough running of an internal combustion engine (10), in which method a signal-processing arrangement (13 - 19, 30, 50, 51) determines the true running of the internal combustion engine (10) from a component of a signal (Ub), which occurs at a generator (11) driven by the internal combustion engine (10) or at a load (12) connected to the generator (11), which component has a short period (Tmn), which results from the superposition of the energy contributions of individual armature windings or phases of the generator (11).

2. Method according to Claim 1, in which the signal component having the duration (Tmn) is filtered out from the signal (Ub) by an adaptive filter (13, 30).

3. Method according to Claim 1 or 2, with a further signal-processing arrangement (50, 51), which determines the signal component having the short period (Tmn) from commutation oscillations (40) of the signal (Ub) of a generator (11) designed as alternating current/three-phase generator with rectifier.

4. Method according to Claim 3, with a plausibility check of the signal emitted by the further signal-processing arrangement (50, 51).

5. Method according to one of the preceding claims, with an allocation of the true running to the individual cylinders of the internal combustion engine by the specification of a reference cylinder which is determined using a reference cylinder signal transmitter (17).

6. Method according to one of the preceding claims, in which the rough running is evaluated as a function of signals which are fed from a controller/regulator (18) of the internal combustion engine (10) to an evaluating unit (15) of the signal processing arrangement (13 - 19, 30, 50, 51).

7. Method according to one of the preceding claims, in which the number of cylinders m of the internal combustion engine (10) is fed to the evaluating unit (15) via an input (16).

## Revendications

1. Procédé pour détecter les irrégularités de fonctionnement d'un moteur à combustion interne (10), procédé dans lequel un agencement de traitement de signaux (13 à 19, 30, 50, 51) détecte la régularité de fonctionnement du moteur à combustion interne (10) à partir d'une fraction d'un signal (Ub), qui apparaît sur un générateur (11) entraîné par le moteur à combustion interne (10) ou bien sur une charge (12) raccordée au générateur (11), ce signal comprenant une courte durée de période (Tmn) qui résulte de la superposition des apports d'énergie de différents enroulements d'induit ou de différentes phases du générateur (11) .

2. Procédé selon la revendication 1, dans lequel la fraction de signal avec la durée (Tmn) est extraite par filtration du signal (Ub) avec un filtre adaptatif (13, 30).

3. Procédé selon la revendication 1 ou la revendication 2 avec un autre dispositif de traitement de signaux (50, 51) qui détermine la fraction de signal avec la courte durée de période (Tmn) à partir d'oscillations de commutation (40) du signal (Ub) d'un générateur (11) revêtant la forme d'un générateur de courant alternatif ou de courant triphasé avec redresseur.

4. procédé selon la revendication 3, avec un contrôle de plausibilité du signal délivré par l'autre agencement de traitement de signaux (50, 51).

5. Procédé selon une des précédentes revendications, avec une association de la régularité de fonctionnement du moteur aux différents cylindres du moteur à combustion interne à l'aide de la prédéfinition d'un cylindre de référence qui est déterminée par un émetteur (17) de signal de cylindre de référence.

6. Procédé selon une des précédentes revendications, dans lequel les irrégularités de fonctionnement sont exploitées en fonction de signaux qui à partir d'un appareil de commande/réglage (18) du moteur à combustion interne (10) sont appliqués à une unité d'exploitation (15) de l'agencement (13 à 19, 30, 50, 51) de traitement des signaux.

7. Procédé selon une des précédentes revendications, dans lequel le nombre de cylindres (m) du moteur à combustion interne (10) est amené à une unité d'exploitation (15) par l'intermédiaire d'une entrée (16).
